# EUROPEAN PATENT APPLICATION

(11) **EP 0 568 367 A2**
(43) Date of publication of application: **03.11.1993**
(21) Application number: 93303358.1
(22) Date of filing: 29.04.1993
(51) Int. Cl.: C04B 14/40, A62D 3/00, B09B 3/00, C03C 1/00

(54) **Process for treating wastes of asbestos**

(30) Priority: 01.05.1992 GB 9209435
(71) Applicant: THE DOW CHEMICAL COMPANY, Midland, Michigan 48640 (US); DOW DEUTSCHLAND INC., D-77834 Rheinmünster (DE)
(72) Inventor: Schüller, Karl Wilhelm,, W-2160 Stade (DE); Oses, Marek Waldemar,, W-2160 Stade (DE); Werner, Michael,, W-2160 Stade (DE); Kurowski, Lothar,, W-2177 Wingst (DE)
(74) Representative: Burford, Anthony Frederick

(57) **Abstract**

Industrial wastes of asbestos are incorporated in pellets containing asbestos residues, glass, alkali metal salt(s), other than alkali metal chlorides and iron or an iron salt. The pellets are heated to a temperature of from 800 to 1200°C.

## Description

The present invention relates to a process for treating industrial wastes of asbestos. Particularly, it relates to a process for destroying the fiber structure in asbestos waste.

Asbestos has been widely used in industry in the past years due to its favorable properties, such as acid resistance, fire proof, low heat conductivity etc. The term "asbestos" defines a group of fibrous silicates, among others chrysotile asbestos which is a hydrated magnesium silicate. It is well known that fibers of chrysotile asbestos are very light and typically have a fiber length of 0.5 to 70 micrometers. The fibers may be easily inhaled and may cause severe pathologies, such as lung cancer etc. Although asbestos has been replaced by other materials in the past few years, still a large amount of asbestos exists, e.g., in structural building material. The asbestos will require a safe disposal after its useful life-time. Accordingly, great effort has been made by those skilled in the art to treat industrial asbestos waste in such a manner that its health risk is minimized.

European patent publication EP-A-0 344 563 relates to a method of heating the industrial wastes of amianthus or fibrous chrysotile asbestos to a temperature of at least 580°C to eliminate the water present in the molecule and to convert the fibrous asbestos into forsterite. However, the fibrous morphology of the material remains and not all of the fibrous chrysotile asbestos material can be destroyed by this heat treatment. In Environmental Health Perspectives, Vol. 9, pp. 267-270, 1974, "Cytotoxicity of Heated Chrysotile", H. Hayashi shows that chrysotile asbestos that has been heated in the temperature range of 500-800°C has a strong cytotoxicity and a strong ability to induce hemolysis.

Database WPIL Week 8933, Derwent Publications Ltd., London, GB, AN 89-237447, abstracting JP-A-01 171 685 suggests treating waste containing asbestos using at least one alkali, such as sodium hydroxide, water and a silicate compound, such as soda glass. The mixture is subjected to a hydrothermal reaction at 140-350°C at 100-350 kg/cm² in such a way as to convert asbestos into non-needle form and to solidify the wastes. However, the fibrous morphology of the asbestos material cannot be destroyed by this treatment.

It is known that the fibrous asbestos structure can be entirely destroyed by heating the asbestos above its melting point, i.e., above 1500°C. L. le Bouffant et al., VDI-Berichte No. 475, 1983, pages 253-259 "Influence d'un traitement thermique des fibres de chrysotile sur leur comportment dans le poumon" teaches that only at 1300°C or more the fibrous structure starts to disappear and small molten beads are formed. However, heating to such a high temperature requires very expensive furnaces.

Published French patent application FR-A-2,165,784 suggests firing serpentine-containing waste material from asbestos mines at a temperature of 1710°C. Alternatively, it suggests to mix the waste material with magnesia, brucite or chromite and to fire it at 1880-1890 °C. Further, it is suggested to mix 70% of waste material, 20% of chalk and 10% of NaOH and to fire the mixture at 1350 °C to give a hard and amber-colored ceramic. Published French patent application FR-A-2,398,704 suggests mixing serpentine-containing waste material from asbestos mines with natural or artificial additives, such as magnesia or alumina. It is also suggested to mix the waste material with 5-25% chalk and/or 5-35% blast furnace slag and/or 5-15% sodium hydroxide and/or 2-15% sodium carbonate and/or 10-25% calcium fluoride and, optionally, 5-25% iron oxide and to fire the mixture at a temperature of 1350°C. Again, expensive furnaces are required to fire the material at such high a temperature.

Published European patent application EP-A-0,145,350 discloses a process for converting waste asbestos into a glass wherein within an electrical glass melting furnace a body of molten glass is maintained at a temperature above the decomposition temperature of asbestos,
asbestos is supplied to the furnace and molten glass is withdrawn from the furnace at a temperature of at least 1000°C. The European patent application discloses that in laboratory scale melting tests it has been found that by combining the asbestos with cullet (waste glass) and as little as 10% by weight NaOH as melt accelerator, the asbestos dissolves completely in the molten glass. The melt accelerator may be an alkali metal compound, an alkaline earth metal compound, a boron compound, a flouride, chloride or a slag. The European patent application discloses that asbestos is destroyed at a temperature above 900°C. It is suggested to maintain the temperature of the molten glass above the decomposition temperature of asbestos (900°C) and preferably at 1350-1380°C, corresponding to a temperature of about 1250°C at the top of the molten glass. However, heating to a temperature of 1350-1380°C requires very expensive furnaces. Furthermore, when heating to a lower temperature, such as 1250°C, vitrification of asbestos waste according to the suggested method takes unduely long. According to Example 1 batches of only 20 g were heated for 60 min.

Published German patent application DE-A-40 04 201 discloses a process for disposal of asbestos waste wherein asbestos waste is mixed with coal dust and/or granulated coal and with additives for lowering the melting point, such as carbonates, sulfates and/or halogenides. The mixture is molten under a reducing atmosphere at about 1400°C. Again, heating to such a high temperature requires a very expensive furnace.

Published PCT application WO-A-91/00123 discloses a mineralogical conversion of asbestos to a non-asbestos product wherein asbestos is treated with a mineralizing agent and the treated asbestos is heated without vitrification. Mineralizing agents include alkali metal-soluble silicates such as lithium, sodium and potassium silicates, alkali metal boron compounds, alkaline earth boron compounds and alkali metal hydroxides. The mineralizing agent is said to aid the process of converting asbestos to a non-asbestos product. However, the treated asbestos has to be heated at least one hour at about 1100°C to achieve conversion of the asbestos. According to the Examples the treated asbestos is usually heated even for a longer time period.

U.S. patent US-A-5,085,838 suggests to convert asbestos into a non-hazardous form by mixing asbestos with a sufficient amount of alkaline flux, such as trona, barium oxide, lead oxide, potassium oxide, sodium oxide, sodium bicarbonate, sodium carbonate or sodium phosphate. The weight ratio between the asbestos material and the alkaline flux preferably is about 1:1. However, the use of some of the suggested materials, such as lead oxide, causes concern due to environmental reasons. Furthermore, the usage of high amounts of alkaline flux renders the asbestos conversion very expensive.

Chemical Abstracts, vol. 108, no. 10, Columbus, Ohio, US, Abstract No. 81424q, abstracting Japanese patent application 62 237 984 suggests to mix solid wastes containing asbestos with a flux and an aid. The flux is chosen from boric acid or its salt, phosphoric acid or its salt, silicium dioxide, alkali metal silicates, alkali metal carbonates and alkali metal hydroxides. The aid is chosen from barium carbonate, barium sulfate, sodium nitrate, potassium nitrate, carbon, graphite, tin chloride and zinc. Many of these suggested materials are quite expensive.

One object of the present invention is to provide a new process for treating asbestos wastes to reduce their risk. A preferred object of the invention is to provide a new process for treating asbestos wastes that does not require heating the asbestos waste to the above indicated very high temperatures.

Surprisingly, it has been found that asbestos wastes can be treated at substantially lower temperatures if pellets are produced that contain a) asbestos wastes, b) glass, c) an alkali metal salt other than alkali metal chlorides, and d) iron or an iron salt.

Accordingly, the present invention relates to a process for treating asbestos wastes by producing pellets containing asbestos residues, glass, an alkali metal salt other than alkali metal chlorides and an iron salt and heating the pellets to a temperature of from 800 to 1200°C.

By producing the above-described pellets and heating them to a temperature of from 800 to 1200°C, asbestos can be transformed into non-fibrous mineralogical phases.

The process of the present inventions is particularly useful for inactivating chrysotile asbestos, however, it can be used for other types of asbestos as well. By the process of the present invention the fiber structure of the asbestos residues is destroyed and the asbestos is transformed into non-fibrous phases.

According to the process of the present invention pellets are produced which contain asbestos residues, glass, an alkali metal salt other than alkali metal chlorides and an iron salt. All types and amounts of components of the pellets described below relate to raw pellets, i.e. to pellets which have not been heated to a temperature between 800 and 1,200 °C yet.

Useful alkali metal salts are for example the sodium or potassium carbonates, bicarbonates, hydroxides, oxides, silicates, aluminates, sulfates, phosphates, nitrates, chromates, fluorides or sulfides. Preferred are the sodium salts, such as sodium bicarbonate, sodium hydroxide, sodium carbonate or, most preferably, sodium oxide. One or more types of alkali metal salts can be used in the pellets. The total weight of alkali metal salt generally is from 1 to 50 percent, preferably from 1 to 30 percent, more preferably from 2 to 15 percent, by the total weight of the pellets. The presence of one or more alkali metal salts other than alkali metal chlorides decreases the melting point of the asbestos residues.

The term "glass" as used herein relates to inorganic glass as defined in "Römpp Chemie Lexikon", 9th edition, pp.1575-1583. Generally, the main component of an inorganic glass is silicium dioxide. Preferred examples are water glass containing of silicium dioxide, water and alkali metal oxides, such as sodium oxide, or technical glass containing silicium dioxide, calcium oxide and sodium oxide.

Usually, the best pellets are achieved when using water glass because water glass soaks the asbestos residues and the alkali salts, whereby pellet formation is facilitated.

On the other hand, the use of technical waste glass is advantageous due to its low price. Technical glass may also contain boron trioxide, aluminum oxide, lead oxide, magnesium oxide, barium oxide and/or potassium oxide. Preferred types of technical glass are window glass and bottle glass. Window glass typically contains about 72 wt.-% silicium dioxide, about 0.3 wt.-% aluminum oxide, about 9 wt.-% calcium oxide, about 4 wt.-% magnesium oxide and about 14 wt.-% sodium oxide. Bottle glass generally contains 70-73 wt.-% silicium dioxide, 1-1.5 wt.-% aluminum oxide, 8-10 wt.-% calcium oxide, 0.1-4 wt.-% magnesium oxide, 0.6-2 wt.-% potassium oxide and 14-15 wt.-% sodium oxide. When using technical glass, preferably recycled bottle glass is used which preferably has a green color. Green bottle glass typically contains 0.5-1.0 % iron oxide by the total glass weight. Technical glass is generally used in ground form which has an average grain diameter of from 0.01 to 0.5 mm, preferably from 0.01 to 0.2 mm, more preferably from 0.05 to 0.15 mm.

The weight of glass generally is from 5 to 95 percent, preferably from 10 to 80 percent, more preferably from 20 to 70 percent, by the total weight of the pellets.

Depending on the type and amount of glass used for producing the pellets, the alkali metal salt, such as sodium oxide or potassium oxide which may be contained in the glass may be sufficient for the purpose of the present invention. In this case no additional amount of an alkali metal salt is added to the asbestos waste and glass for producing the pellets. The above-indicated preferred ranges for the amount of the alkali metal salt include the amount of alkali metal salt that is optionally comprised in the glass.

One or more iron salts are incorporated into the pellets as well. Preferred iron salts are iron oxides, hydroxides, halides, such as chlorides, or sulfates. Fe(II) salts can be used, however Fe(III) salts are preferred. Iron oxides, iron trichloride, iron hydroxides, iron sulfates or micaceous iron are preferred. Most preferably, hematite (Fe₂O₃) or magnetite (Fe₃O₄, a mixed Fe(II)/Fe(III)oxide) is used. The iron salts need not to be added in pure form. Waste materials containing iron salts, such as iron oxides or iron chlorides, are also useful. Exemplary of such waste materials are filter cakes from waste water treatment containing iron salts or slag, such as converter slag containing iron oxide in addition to silicates and alkaline earth metal oxides. Another useful source of iron oxide is green bottle glass which generally contains from 0.5 to 1.0 wt.-% iron oxide. Alternatively, metallic iron can be incorporated in the pellets which is then transformed to an iron salt, such as iron oxide, during heat treatment. The total weight of iron or an iron salt generally is from 1 to 35 percent, preferably from 2 to 20 percent, more preferably from 3 to 10 percent, by the total weight of the pellets. The presence of one or more of the indicated transition metal salts facilitates the transformation of the asbestos fibers into a non-fibrous form. Specifically, the addition of iron or an iron salt is necessary to form nonfibrous solid phases-like aegirinaugit (mixed crystal CaMgSi₂O₆-NaFeSi₂O₆) and magnesioferrit (MgFe₂O₄). The iron salts facilitate the destruction of chrysotile asbestos fibres.

Further, various stabilizing agents may be incorporated into the pellets which increase the impact strength of the pellets during handling or transportation before heat treatment and/or which increase the stability of the pellets during the heat treatment. Preferred stabilizing agents are clay minerals, preferably mixed layer clay minerals, such as smektite or various types of attalpulgites or, preferably, bentonite. Other preferred stabilizing agents are cellulose ethers, such as known methyl or ethyl cellulose ethers, or C1-2-alkyl hydroxy-C₁₋₄-alkyl cellulose ethers, such as hydroxyethyl or hydroxypropyl or hydroxybutyl methyl cellulose ethers or hydroxyethyl or hydroxypropyl or hydroxybutyl ethyl cellulose ethers. If one or more stabilizing agents are incorporated into the pellets, their total weight generally is from 0.1 to 1.0 percent, preferably from 0.2 to 0.6 percent, more preferably from 0.25 to 0.4 percent, by the total weight of the pellets.

Generally, the remainder of the pellets is waste asbestos which optionally contains residual amounts of water. Depending on the prior use of the asbestos, asbestos residues generally contain up to 90 percent, preferably up to 80 percent, but more preferably only up to 70 percent water, by the total weight of dry asbestos and water.

The raw pellets, which contain glass sand from ground technical glass, preferably contain from 1 to 20%, more preferably from 2 to 10%, most preferably from 3 to 8% of one or more iron salts, such as an iron oxide and/or an iron chloride, from 8.5 to 94.5%, more preferably from 30 to 80%, most preferably from 40 to 60% technical glass and from 90.5 to 4.5%, more preferably from 68 to 18%, most preferably from 57 to 27% of asbestos, based on the total weight of iron salt(s), glass and asbestos. Excellent compositions of the pellets contain 3-6.5 wt.-% iron oxide, 50-70 wt.-% technical glass and 43.5-27 wt.-% asbestos. The necessary alkali metal salt (sodium oxide) is included in the ground technical glass.

When using water glass for producing the pellets, preferably sodium bicarbonate is added as an alkali metal salt. The raw pellets preferably contain from 3 to 35%, more preferably from 3 to 30%, most preferably from 5 to 10% of one or more iron salts, such as iron oxide and/or iron chloride, from 5 to 80%, more preferably from 10 to 50%, most preferably from 20 to 40% of water glass, and from 1 to 15%, more preferably from 1 to 10%, most preferably from 2 to 5% of sodium bicarbonate and asbestos, based on the total weight of iron salt, water glass, sodium bicarbonate and asbestos. The amount of iron oxide in the indicated raw pellets preferably is from 3 to 20%, more preferably from 3 to 10%, most preferably from 5 to 8%, based on the total weight of iron salt, water glass, sodium bicarbonate and asbestos.

The above indicated components are compounded to pellets by mixing waste asbestos with the other ingredients. When using ground technical glass, preferably first the technical glass and then an iron salt such as an iron oxide is added to the asbestos waste. When using water glass, preferably water glass is added first to the waste asbestos and then the other components such as sodium bicarbonate and iron oxide are added to the asbestos waste. As indicated above, stabilizing agents, such as bentonite may also be added. If desired, water may be added in order to facilitate the formation of the pellets. However, the sequence of adding the components of the pellets to be produced is not very critical. Known pelletizers are useful for producing the pellets, such as mixing drums wherein pellets are produced without applying pressure. The temperature during pelletization is not very critical; usually the pelletizer is not heated. In some cases it may be advantageous to pre-dry the pellets before heating them to a temperature of from 800 to 1200°C. The stability of the pellets is usually increased by the pre-drying process. Pre-drying is generally carried out at a temperature of from 100 to 250°C, preferably from 150 to 250°C, more preferably from 180 to 220°C, during 1 to 3 hours, preferably during 1 to 2 hours. Pre-drying is especially advantageous if the industrial wastes of asbestos contain a substantial residual water content.

The produced pellets generally have an average diameter of from 1 to 100 mm, preferably from 5 to 50 mm, more preferably from 10 to 44 mm, most preferably from 20 to 30 mm. The term "pellets" as used herein means a material of any shape having the above-mentioned diameter. Granules and beads are also meant by the term "pellets". For more convenient handling in the subsequent heating process, the pellets may be packed into suitable containers, such as plastic bags or plastic drums which will be incinerated at a temperature between 800 and 1200°C.

The pellets are heated to a temperature of from 800 to 1200°C, preferably from 900 to 1100°C, more preferably from 1000 to 1100°C. The eutectic melting point of the pellets having the above-indicated chemical composition is within the indicated temperature range. This melting point is considerably lower than the melting point of non-diluted asbestos, which is more than 1500 °C.

After the melting point of the pellets has been reached, the pellets are usually kept at about this temperature for a period of up to 10 minutes, preferably up to 5 minutes. Sintering or defibration of the pellets is achieved by this heat treatment. The total residence time of the pellets in the heating equipment, such as a furnace, generally is from 10 to 60 minutes, preferably from 10 to 30 minutes, most preferably about 15 minutes.

The heating of the pellets is preferably carried out under oxidizing or, more preferably, reducing conditions. Oxidizing or reducing conditions are for example achieved by feeding excess oxygen or air into the heating apparatus or by reducing the oxygen or air feed.

Due to the relatively low eutectic melting point of the pellets, the heating can be carried out in a medium temperature heating apparatus, such as a well known chemical or municipal waste incinerator.
Preferably, a known rotary kiln is used. According to the process of the present invention, utilization of highly sophisticated or very expensive heating equipment is not necessary for slagging and inactivation of asbestos residues.

By the process of the present invention fibrous asbestos material, such as chrysotile asbestos, is transformed into a non-fibrous form. Typically, not a single non-fibrous form is built but a multiple of phases, such as glass phases as well as crystalline mineralogical phases like forsterite [Mg₂SiO₄], clinohumite [Mg₉(OH)₂(SiO₄)₄], sapphirin [(Mg,Fe)₂Al₄O₆SiO₄], aegirinaugite [mixed crystal CaMgSi₂O₆-NaFeSi₂O₆], magnesioriebeckite [Na₂Mg₃Fe₂(OH)₂Si₈O₂₂], periklas [MgO], or magnesioferrite [MgFe₂O₄]. Surplus iron forms hematite (Fe₂O₃].

The obtained material after heat treatment is inert and can be used for road beds and so on.

The present invention is further illustrated by the following examples which should not be construed to limit the scope of the patent protection. All parts and percentages are by weight unless otherwise mentioned.

### Example 1

60.5 parts of waste asbestos containing 60% of water are charged into the pelletizer. 30 parts of water glass (consisting of 23% Na₂O, 17% SiO₂, and 60% H₂O) are added. 6 parts of iron oxide (Fe₂O₃) are added to form iron containing mineralogical phases. Three parts of sodium bicarbonate (NaHCO₃) are added for solidification of the mixture with the water glass. Finally, 0.5 parts of bentonite are added to increase the impact strength of the raw pellets. During the whole addition process, the pelletizer is rotating. The pellets are pre-dried at a temperature of 200°C during 90 minutes, cooled and then filled into a plastic drum. The drum is charged into a rotary kiln where a temperature of 1100°C during 15 minutes is maintained.

The exhaust gas from the rotary kiln and the vitrified slag from the defibrated pellets were analyzed by electron microscope. No asbestos fibers could be detected.

### Comparative Example A

65 parts of waste asbestos containing 60% of water and 31 parts of water glass (consisting of 23% Na₂O, 17% SiO₂ and 60% H₂O) are charged into the pelletizer. 3.5 parts of sodium bicarbonate (NaHCO₃) are added for solidification of the mixture with the water glass. Finally, 0.5% of bentonite are added to increase the impact strength. As in Example 1, during the whole addition process, the pelletizer is rotating. The pellets are pre-dried at a temperature of 200°C during 90 minutes and burnt in a lab furnace at 1100°C during 15 minutes.

The resulting slag as analyzed by electron and light microscopes. Asbestos fibers could still be detected by light microscope, illustrating that the transformation of the asbestos fibers was not complete when no iron salt, such as iron oxide was added to the pellets.

### Example 2

Pellets are produced as in Example 1, using the following ingredients: 55 parts of asbestos waste containing 60% water, 13.5 parts of water glass, 5 parts of iron oxide (Fe₂O₃), 1.5 parts of sodium bicarbonate, 24.5 parts of iron chloride (FeCl₃ x 6H₂O) and 0.5 parts of bentonite. The pellets are pre-dried at a temperature of 200°C during 90 minutes, cooled and then filled into a plastic drum. The drum is charged into a rotary kiln where a temperature of 1100°C during 15 minutes is maintained.

The exhaust gas from the rotary kiln and the vitrified slag from the defibrated pellets were analyzed by electron microscope. No asbestos fibers could be detected.

### Example 3

Pellets are produced as in Example 1, using the following ingredients: 30 parts of asbestos waste containing 60% water, 66.5 parts of glass sand (ground float glass), 3 parts of iron oxide (Fe₂O₃) and 0.5 parts of bentonite. The pellets are pre-dried at a temperature of 200°C during 90 minutes, cooled and then filled into a plastic drum. The drum is charged into a rotary kiln where a temperature of 1100 °C during 15 minutes is maintained.

The exhaust gas from the rotary kiln and the vitrified slag from the defibrated pellets were analyzed by electron microscope. No asbestos fibers could be detected.

## Claims

1. A process for treating wastes of asbestos by producing pellets containing
a) asbestos residues,
b) glass,
c) an alkali metal salt other than alkali metal chlorides, and
d) iron or an iron salt and heating the pellets to a temperature from 800 to 1200°C.

2. A process as claimed in Claim 1, wherein the iron salt is an oxide, hydroxide, halide or sulfate.

3. A process as claimed in Claim 1 or Claim 2, wherein the iron salt is an Fe(III) salt.

4. A process as claimed in any one of the preceding claims, wherein the iron salt is iron oxide.

5. A process as claimed in any one of the preceding claims, wherein the alkali metal salt is sodium bicarbonate, sodium hydroxide, sodium carbonate or sodium oxide.

6. A process as claimed in any one of the preceding claims, wherein at least part of the alkali metal salt is contained in the glass.

7. A process as claimed in Claim 6, wherein the glass is i) technical glass containing silicium dioxide, calcium oxide and sodium oxide, or ii) water glass containing silicium dioxide, sodium oxide and water.

8. A process as claimed in Claim 6, wherein the pellets contain from 1 to 20% of one or more iron salts, from 8.5 to 94.5% of technical glass and 90.5 to 4.5% asbestos residues, by the total weight of iron salt(s), glass and asbestos.

9. A process as claimed in any one of Claims 1 to 4, wherein the pellets contain from 3 to 35% iron salts, from 5 to 80% water glass, from 1 to 15% sodium bicarbonate and asbestos residues, based on the total weight of iron salt(s), water glass, sodium bicarbonate and asbestos.

10. A process as claimed in any one of the preceding claims, wherein the pellets additionally contain a cellulose ether and/or a clay mineral.

11. A process as claimed in any one of the preceding claims, wherein the pellets are pre-dried at a temperature of from 100 to 250°C before they are heated to a temperature of from 800 to 1200°C.

12. A process as claimed in any one of the preceding claims, wherein the pellets are heated during 10 to 60 minutes.
